Europäisches Patentamt

European Patent Office

Office européen des brevets

(19)

(11) EP 0 343 096 B1

(12) EUROPEAN PATENT SPECIFICATION

(45) Date of publication and mention
of the grant of the patent:
**18.08.1999 Bulletin 1999/33**

(51) Int Cl.⁶: **D06F 37/02**, D06F 25/00,
D06F 95/00, D06F 39/08

(21) Application number: 89730040.6

(22) Date of filing: **21.02.1989**

(54) **Drum type washing apparatus**

Trommelwaschmaschine

Machine à laver à tambour

(84) Designated Contracting States:
**DE FR GB IT**

(30) Priority: 23.02.1988 JP 4051388
28.07.1988 JP 18866188
13.09.1988 JP 22741888
26.10.1988 JP 13976688
15.03.1988 JP 6128188
06.12.1988 JP 30694288
25.01.1989 JP 1558089

(43) Date of publication of application:
**23.11.1989 Bulletin 1989/47**

(60) Divisional application: 93250068.9 / 0 548 063
93250070.5 / 0 550 423
93250071.3 / 0 548 064

(73) Proprietors:
• **MITSUBISHI JUKOGYO KABUSHIKI KAISHA
Tokyo 100 (JP)**
• **Churyo Engineering Kabushiki Kaisha
Nagoya-shi Aichi-ken (JP)**

(72) Inventors:
• **Tsubaki, Yasuhiro c/o Nagoya Techn. Institute
Nakamura-ku Nagoya Aichi Pref. (JP)**
• **Ishihara, Hidetoshi c/o Nagoya Machinery Works
Nakamura-ku Nagoya Aichi Pref. (JP)**
• **Kitajima, Kazuo c/o Nagoya Tech. Institute
Nakamura-ku Nagoya Aichi Pref. (JP)**
• **Hayashi, Shoichi c/o Nagoya Machinery Works
Nakamura-ku Nagoya Aichi Pref. (JP)**
• **Ueda, Atsushi c/o Nagoya Machinery Works
Nakamura-ku Nagoya Aichi Pref. (JP)**
• **Yagami, Kenichi c/o Nagoya Machinery Works
Nakamura-ku Nagoya Aichi Pref. (JP)**
• **Yamada, Shuji c/o Churyo Engineering K.K.
Nagoya-shi Aichi-ken (JP)**

(74) Representative:
**Meissner, Peter E., Dipl.-Ing. et al
Meissner & Meissner,
Patentanwaltsbüro,
Postfach 33 01 30
14171 Berlin (DE)**

(56) References cited:
BE-A- 677 929          DE-A- 2 513 660
DE-C- 829 159          DE-C- 890 037
FR-A- 1 113 123        FR-A- 1 370 320
GB-A- 467 594          GB-A- 858 182
US-A- 3 358 301        US-A- 3 444 710

Remarks:
Divisional application 93250068.9 filed on 21/02/89.

## Description

## SPECIFICATION

## 2. FIELD OF THE INVENTION AND RELATED ART STATEMENT

The present invention relates to a drum type washing apparatus usable on the domestic basis as well as on the industrial basis to process the wash wherein at least one step among steps of washing, dewatering and drying inclusive a step of dry cleaning can be performed in a single unit to process the wash, e.g., various kinds of underwears in individual home or linens, bed sheets or the like in hotel, hospital or the like facilities.

Hitherto, the laundry industry has offered such laundry services as comprising the receiving of soiled cloths such as towels, sheets, bandages, uniforms or the like (hereinafter generally referred to as linens) from hotel, hospital or the lthe ike facilities, processing of them for the purpose of reuse and the delivering of cleaned linens to hotel, hospital or the like facilities. Steps of processing are usually divided into (1) washing, (2) dewatering, (3) drying and (4) finishing. In a case where linens such as towels or the like should be completely dried, steps (1) to (3) are required. On the other hand, in a case where linens such as sheets, bandages, uniforms or the like should be finished by ironing, steps (1) to (4) are required (It should be noted that a step (3) of drying is performed within a short period of time).

With a conventional apparatus, in general, linens are first washed and dewatered and after completion of steps of washing and dewatering the linens are conveyed to a drier in which a step of drying is performed.

The conventional apparatus in which steps of washing and dewatering are continuously performed includes a rotary drum of which wall is made of a perforated plate, and a plurality of beaters are attached to the wall of the rotary drum so that the linens are lifted up from the inner wall surface of the rotary drum as the latter is rotated. With this construction, the linen are usually washed in the presence of detergent under the influence of shock appearing over the water surface when they fall down. On completion of the step of washing, the rotary drum in turn is rotated at a higher rotational speed so that water involved in the linens is dewatered therefrom under the effect of centrifugal force generated by rotation of the rotary drum at such a high rotational speed. On completion of the step of dewatering, a laundryman stops operation of the apparatus and displaces the linens in a wagon or the like to carry them to a drier in which a next step of drying is performed. To dry the linens, a rotary drum type drier is usually employed which includes a rotary drum in which the washed and dewatered linens are dried by blowing hot air into the interior of the rotary drum. A period of time required for performing a step of drying in the rotary drum differs in dependence on the kinds of linens which are typically divided into two kinds, one of them being linens such as towels or the like which require complete drying and the other one being half-dried linens such as sheets, bandages, uniforms and so forth which are conveyed to a next shop where they are finished by ironing. Thus, a drying time is properly selected in dependence on the kinds of linens to be dried.

The above description has been generally referred to the prior art which requires that steps of washing and dewatering and a step of drying are performed using two independent units. As a special case, a so-called washing/dewatering/drying unit is already commercially sold in which steps of washing, dewatering and drying are successively performed using a single unit.

Since this type of unit is so constructed that steps of washing, dewatering and drying are performed without discontinuance, it is unnecessary that a laundryman carries linens in the course of washing operation as is the case with the separate type unit. In fact, however, the unit has the following restrictions from the viewpoint of structure, resulting in the unit failing to be widely put in practical use.

(1) When steps of washing, dewatering and drying are continuously performed in the conventional unit, a period of time required for executing these steps one after another is prolonged substantially longer than a total value of time comprising a time required by the conventional washing/dewatering unit and a time required by the drier, resulting in productibity being reduced. This is attributable to the fact that a perforation rate of the rotary drum is restricted within the range of 20 to 30 % from the viewpoint of mechanical strength of the rotary drum which should be rotated at a higher rotational speed to perform a step of continuous dewatering. Since an ordinal drier has a perforation rate of about 60 %, it is obvious that the conventional washing/dewatering apparatus has a reduced air venting efficiency compared with the drier and this leads to a result that a drying time is prolonged.

(2) After completion of the steps of washing and dewatering, it is often found that some kind of linens, e.g., towels, sheets or the like are brought in tight contact with the inner wall surface of the rotary drum. This makes it difficult to remove the linens away from the inner wall surface of the rotary drum during a period of drying, resulting in uniform drying being achieved only with much difficulties. Sometimes, there arises a necessity for interrupting operation of the unit to manually remove the linens from the inner wall surface of the rotary drum.

(3) Generally, an operation for removing the linens from the rotary drum after completion of a step of washing is a severe task which requires a high intensity of force to be given by a young laundryman.

Accordingly, a request for facilitating removal operation has been raised from the laundry industry.

Now, description will be made in more details below as to structure of the rotary drum which has been used for the conventional washing/dewatering/drying unit.

A rotary drum type dewatering unit adapted to perform a step of dewatering under the effect of centrifugal force is identical to each of a washer usable in individual home, a laundry washer, a dry cleaner in which an organic solvent is used as a washing medium and a centrifugal type dewatering unit usable on the industrial base as far as a fundamental structure associated with dewatering operation is concerned. Therefore, description will be typically made with reference to a washer usable in individual home.

As shown in Figs. 29(A) and 29(B), a dewatering barrel 1 is composed of a rotary drum 2 of which cylindrical wall is made of a perforated plate having a perforation rate in the range of 10 to 20 %, a rotational shaft 3 adapted to support the rotary drum 2 to rotate the latter and a motor 4 for rotating the rotational shaft 3. Reference numeral 9 designates a number of holes which are drilled through the cylindrical wall 7, reference numeral 10 does a water discharge pipe attached to the bottom of the dewatering barrel 1 and reference numeral 11 does a plurality of vibration proof rubbers interposed between the motor 4 and the base platform of the washer.

After completion of a step of washing, linens 5 are introduced into the dewatering barrel 1 from a washing barrel (not shown), the dewatering barrel 1 is closed with a lid 6 and a desired period of time is then set using a timer switch (not shown). Then, the rotary drum 2 is rotated at a higher speed by the motor 2 so that water in the linens 5 is discharged through the cylindrical wall 7 made of a perforated plate of which center axis coincides with that of the rotary drum 2.

The inventors examined the prior art as mentioned above by measuring a water content of each of the linens 5' at the time when a step of dewatering is substantially completed, the linens 5' being placed round the inner wall surface of the cylindrical wall 7 in a layered structure while having an uniform thickness as viewed in the peripheral direction, as shown in Fig. 30. Results derived from the measurements reveal that the linens 5' located in the proximity of the inner wall surface of the cylindrical wall 7 has a water content about two times as much as that of the linens 5' located remote from the inner wall surface of the cylindrical wall 7, i.e., the linens 5' located near to the axis of rotation of the cylindrical wall 7, as shown in Fig. 31.

This is because of the fact that the cylindrical wall 7 extends at right angles relative to the direction of centrifugal force as is best seen in Fig. 30 so that water remaining between the linens 5 and the inner wall surface of the cylindrical wall 7 is prevented from moving along the inner wall surface of the cylindrical wall 7, resulting in the water retained therebetween failing to be discharged from the linens 5'. On the other hand, since water involved in the linens 5' located remote from the inner wall surface of the cylindrical wall 7 is caused to smoothly move through capillary tubes in the linens 5' in the direction R of centrifugal force, the result is that the linens 5' located in the proximity of the central part of the rotary drum 2 have a water content less than that of the linens 5' located in the proximity of the inner wall surface of the cylindrical wall 7, as shown in Fig. 31.

Additionally, there is a tendency that the linens 5' located in the proximity of the inner wall surface of the cylindrical wall 7 has a water content which is increased more and more as a thickness of the linens 5' is reduced. It is believed that this is attributable to the fact that the linens 5' (located remote from the inner wall surface of the cylindrical wall 7) to serve for thrusting the linens 5' located in the proximity of the inner wall surface of the cylindrical wall 7 in the direction of centrifugal force has a reduced weight, causing an effect of squeezing the water to be reduced.

As will be readily apparent from the above description, since the conventional dewatering unit is so constructed that the cylindrical wall 7 constituting the rotary drum 2 extends at right angles relative to the direction 8 of centrifugal force, it has significant drawbacks that water involved in the linens 5 located near to the inner wall surface of the cylindrical wall 7 can not be satisfactorily discharged from the rotary drum 2 and thereby a property of dewatering which can be expected in nature from an intensity of centrifugal force fails to be exhibited to satisfaction. As a result, an extra quantity of energy and time are naturally consumed for the purpose of drying the linens after completion of a step of dewatering.

Next, a step of washing to be performed with the use of a conventional unit will be described below with reference to Fig. 32 which schematically illustrates a drum type washing unit.

Specifically, Fig. 32 is a schematic sectional view illustrating the drum type washing unit which is maintained during a period of washing.

In the drawing, reference numeral 21 designates a washing barrel, reference numeral 22 does a rotary drum, reference numeral 23 does a plurality of beaters for lifting up linens 25 while the rotary drum 22 is rotated in the direction (as identified by an arrow mark 26) and reference numeral 24 does a washing water which has been introduced into the interior of the washing drum 21 via a water supply piping 31.

Reference numeral 27 designates a lint filter for catching waste threads (lints) derived from the linens 25. The lint filter 27 is accommodated in a filter box 28 having a water discharge valve 29 connected thereto.

With this construction, a water level of the washing water 24 is monitored by a water level meter (designed in a float type, a hydraulic pressure type or the like) which is not shown in the drawing, and when a predetermined quantity of water is introduced into the washing barrel 21, a water supply valve 30 is closed automatically.

The rotary drum 22 is rotated when water supply is started. It continues to be rotated for a period of time set by a timer circuit and associated components (not shown) even after the washing water 24 reaches a predetermined value of water level so that so-called beat washing is performed for the linens 25 by allowing the latter to be lifted up by the beaters 23 and then caused to fall down. After completion of the step of washing, the water discharge valve 29 is opened whereby waste washing water 24 is discharged from the rotary drum 22 to the outside while flowing through the filter 27.

As described above, according to the conventional method of washing the linens 25 using a rotary drum, the linens 25 are washed by repeatedly lifting up them by the beaters 23 and then causing them to fall down by their own dead weight. This allows an upper limit of the number of revolutions of the rotary drum 22 to be defined in the range of 0.7 to 0.8 G which is represented in terms of a gravity acceleration. If the rotary drum 22 is rotated at a higher speed as represented by more than 1 G, the linens 25 are brought in tight contact with the inner wall surface of the rotary drum 22 with the result that the linens 25 can not fall down, causing an effect of washing operation to be reduced remarkably.

It is obvious from the viewpoint of an effect of washing operation that the number of drops of the linens 25 can be increased more and more by increasing the number of revolutions of the rotary drum as far as possible with the result that an effect of agitation can be increased remarkably accompanied by an improved property of washing or a reduced time required for performing a step of washing. However, the number of revolutions of the rotary drum can not be set to a high level in excess of 1 G for the foregoing reasons and this offers a significant obstruction appearing when a washing time is to be shortened.

Next, a conventional step of dewatering will be described below with reference to Figs. 33 and 34 which schematically illustrate structure of a rotary drum.

As shown in Fig. 33, the washing/dewatering unit includes a rotary drum 42 of which cylindrical wall is formed with a number of communication holes 41, and a plurality of beaters 44 (three beaters in the illustrated case) are attached to the inner wall surface of the rotary drum while projecting in the inward direction. In the drawing, reference numeral 45 designates a main shaft for supporting the rotary drum and reference numeral 46 does bearings for rotatably supporting an assembly of the rotary drum 42 and the main shaft 45.

With such washing/dewatering unit, linens to be washed are introduced into the interior of the rotary drum 42 to be washed and after completion of the step of washing, rinsing operations are performed by several times so that the process goes to a step of dewatering to be performed by rotating the rotary drum 42 at a higher rotational speed. It should be noted that during a period of dewatering there may arise a difficult problem that the linens can not be removed from the rotary drum 42 because the latter are brought in tight contact with the inner wall surface of the rotary drum 42 due to penetration of a part of the linens into the communication holes 41 during rotation of the rotary drum at a high rotational speed.

To obviate the foregoing problem, there have been already raised a variety of proposals for preventing the linens from coming in tight contact with the inner wall surface of the rotary drum 42. One of the proposals is such that a plurality of tight contact prevention plates 47 having an adequate configure and dimensions are secured to a part of the inner wall surface of the rotary drum located between the adjacent beaters 44. As is best seen in Fig. 34, the tight contact prevention plates 47 may be designed either in the form of a flat plate as seen on the side walls or in the form of a hill-shaped member as seen on the bottom side of the rotary drum 42.

According to this proposal, since each of the tight contact prevention plates 47 is secured to a part of the inner wall surface of the rotary drum 42 between the adjacent beaters 44, no penetration of a part of the linens 48 into the communication holes 41 takes place during a period of dewatering because the communication holes 41 located at a part between the adjacent beaters 44 and a part of the inner wall surface of the rotary drum 42 occupied by the tight contact prevention plate 47 are covered with the beaters 41 and the tight contact prevention plate 47. Thus, washing water in the linens 48 is discharged from the rotary drum 42 only through other communication holes 41. This makes it possible to easily remove the linens 48 from the interior of the rotary drum 42 while slowly turning the latter because no penetration of a part of the linens 48 into the communication holes 41 takes place at a part between the adjacent beaters 44 and a part of the inner wall surface of the rotary drum 42 occupied by the tight contact prevention plate 47 as mentioned above, although some part of the linens 48 is penetrated into the communication holes 41 at an area where that latter are not closed with the beaters 44 and the tight contact prevention plates 47.

After completion of the step of washing, the process goes to a next step of dewatering during which washing water involved in the linens 48 is separated therefrom by rotating the rotary drum 42 at such a higher rotational speed that causes a high intensity of centrifugal force (represented, e.g., by 300 G) to be generated. This permits a part of the linens 48 to be penetrated into the communication holes 41 under the effect of the centrifugal force generated in that way whereby the linens are brought in tight contact with inner wall surface of the rotary drum 42.

To prevent the linens from coming in tight contact with the inner wall surface of the rotary drum 42, there was made the above-mentioned proposal that some part of the communication holes 41 are closed with a plurality of tight contact prevention plates 47 so that the linens 48 can be easily removed from the inner wall surface of the rotary drum 42. In spite of the fact that a principal object of the step of dewatering is to discharge washing water through the communication holes 41, however, the above proposal is achieved by closing a part of the communication holes 41 with a dewatering rate being reduced to some extent, in order to prevent the linens 49 from being brought in tight contact with the inner wall surface of the rotary drum. Accordingly, a large quantity of energy is required in correspondence to a degree of reduction of the dewatering rate for performing a subsequent step of drying.

Next, a conventional step of drying will be described below with reference to Figs. 35 to 37.

Figs. 35 to 37 are a schematic view of a conventional drier or washing/dewatering/drying unit, respectively, particularly illustrating the flowing of a hot air in the surrounding area of a rotary drum.

First, description will be made with reference to Fig. 35 as to a step of drying.

In the drawing, reference numeral 51 designates a rotary drum, reference numeral 52 does an air heater comprising a steam jacket or the like, reference numeral 53 does linens and reference numeral 54 does a suction type blower adapted to suck a hot air 55' and then discharge it from the drying system to the outside.

According to the illustrated arrangement, the hot air 55' which has moved through the air heater 52 via an air intake port 56 disposed above the rotary drum 51 is sucked, it is then introduced into the interior of the rotary drum 51 through the holes on the wall of the rotary drum 51 while flowing round the outer wall surface of the latter until it comes in contact with the linens 53 and thereafter it is discharged to the outside via a suction type blower 54 and an exhaust port 57 situated below the rotary drum 51. A characterizing feature of this arrangement consists in that hot air flows in the form of a so-called laminar flow having a number of streaming lines aligned with each other, which is inherent to the suction type air flowing.

Next, description will be made further with reference to Fig. 36 as to the step of drying. The unit shown in Fig. 36 is substantially similar to that in Fig. 35 in structure. As is apparent from Fig. 37 which is a sectional side view of the unit, the latter includes a hot air distributing box 58 located above the rotary drum 51 so that the hot air 55' is positively introduced into the rotary drum 51 from the front part of the upper half of the latter to flow uniformly within the interior of the rotary drum 51. This arrangement exhibits an effect of laminar flow more clearly than in the case as shown in Fig. 35.

As will be readily apparent from the above description, a main feature of the conventional suction type arrangement consists in employment of the suction blower 54 which assures that the hot air 55' is introduced into the rotary drum 51 in the form of a laminar flow and thereby the linens 53 which have been lifted up in the rotary drum 51 as the the latter is rotated are dried in a floated state.

In this manner, the conventional unit employs the suction type arrangement to bring hot air into the rotary drum so that the hot air flows in the form of a so-called laminar flow. Usually, an average flowing speed of the hot air is determined in the range of 1 to 5 m/sec. In an extreme case, it has the maximum flowing speed less than 5 m /sec.

With this construction, to assure that linens are effectively brought in contact with hot air within the interior of the rotary drum, it is necessary that the number of revolutions of the rotary drum is determined in the range of 0.7 to 0.8 G in terms of a gravity acceleration and the linens are floated in the atmosphere including hot air in the form of a laminar flow. If the rotary drum is rotated at a higher rotational speed as represented by more or less 1 G or in excess of 1 G, the result is that the linens are brought in tight contact with the inner wall surface of the rotary drum, causing them to be dried only with much difficulties. In other words, an opportunity for allowing a mass of linens located at the lower part of the rotary drum to be floated in hot air as the rotary drum is rotated is obtainable with the highest possibility when the rotary drum is rotated at a rotation speed which remains in the range of 0.7 to 0.8 G. Thus, if the rotary drum is rotated at a lower speed, the result is that the above opportunity is obtainable with a reduced possibility.

Further, since an average flowing speed of the hot air is maintained at a low level of 1/2 m/sec, a relative speed of the hot air to the linens can not be set to a high level. Strictly speaking, discharging of water vapor produced from the linens is achieved with a delay corresponding to reduction of the relative speed of hot air to the linens.

For the foregoing reasons, an average drying time is usually set in the range of 30 to 40 minutes in accordance with the conventional suction type drying manner. Accordingly, a request for a drier which assures that a drying time can be shortened substantially compared with the conventional drying manner has been raised from the laundry industry.

On the other hand, the conventional drying manner is performed such that linens which have been washed and dewatered are introduced into the rotary drum and the latter is then rotated at a rotational speed under a condition of the centrifugal acceleration as represented by less than 1 G in terms of a gravity acceleration appearing round the inner wall surface of the rotary drum. Thereafter, the linens are lifted up away from the inner wall surface of the rotary drum by activating the beaters attached to the inner wall surface of the rotary drum and they are then caused to fall down by their own dead weight so that they are dried by blowing hot air into the interior of the rotary drum.

To this end, the rotary drum requires a sufficient volume of space in which linens can move freely while they remain within the interior of the rotary drum. Generally, a space about two times as wide as the space set for performing the preceding step of dewatering is required for performing a step of drying. Accordingly, a conventional fully automatic washing/dewatering/drying unit including a single rotary drum in which steps of washing, dewatering and drying are successively performed requires a volume of space two times as large as that of the conventional washing/dewatering unit, causing a manufacturing cost required for manufacturing the unit and dimensions determined for the same to be increased substantially.

Here, for the purpose of reference, description will be made below as to a calculation standard (provided by Japan Industrial Machinery Manufacturer Association) for a standard quantity of load to be carried by a washing/dewatering unit for a laundry shop.

$$\text{standard quantity of load to be borne } Q = f \cdot \frac{1}{4} \pi D^2 L$$

where f designates a load rate in Kg/m$^3$ wherein f is represented by 45 + 30 D in a case of a washing/dewatering unit and it is represented by 40 in a case of a drier, D does an inner diameter of the rotary drum in meter and L does a inner length of the rotary drum in meter.

The inner length of the rotary drum represents a dimension which is determined such that linens can be introduced into and removed from the rotary drum. Concretely, it is determined in the range of 1.0 to 1.3 m in a case where the rotary drum is charged with a normal quantity of load of 30 Kg. In this case, a drier has a volume of space as represented by a ratio of 1.875 to 2.1 compared with that of the washing/dewatering unit.

If an excessive quantity of load more than the above standard quantity of load is introduced into the rotary drum of the conventional washing/dewatering unit during a step of drying, it has been confirmed that linens are dried with fluctuation in degree of dryness from location to location as viewed round the inner wall surface of the rotary drum due to immovability of the linens within the interior of the rotary drum and moreover the linens require a long drying time in comparison with the quantity of load. Another problem is that if the linens are excessively dried to eliminate the fluctuation in degree of dryness, they tend to have a remarkably reduced period of running life.

Next, description will be made below as to discharging of linens, i.e., removal of the same.

As shown in Figs. 40 and 41, a conventional washing/dewatering unit in which steps of washing and dewatering are successively performed includes a rotary drum 60 of which cylindrical wall is made of a perforated plate 61, and a step of washing is performed in such a manner that linens are repeatedly lifted up by activating a plurality of beaters 62 as the rotary drum is rotated and they are then repeatedly caused to fall down by their own dead weight. When the step of washing is terminated, the rotary drum 60 is rotated at a higher speed so as to allow the linens to be dewatered. On completion of the step of dewatering, an operator stops rotation of the washing/dewatering unit and then opens a door 63 to manually remove from the interior of the rotary drum 60 the linens which have been brought in tight contact with the inner wall surface of the rotary drum under the influence of centrifugal force. Thereafter, he discharges the wet linens from the rotary drum to the outside and then puts them in a wagon or the like means to carry them to a drier.

Thereafter, he opens a door of the drum type drier to introduce the linens into a rotary drum so that they are dried by blowing hot air into the interior of the rotary drum while the latter is rotated.

After he confirms that the linens have been completely dried, he stops operation of the drier, opens the door, manually removes the linens from the interior of the rotary drum and then puts them in a wagon or the like means to carry them to a next step.

As described above, when linens are to be processed in the conventional washing/dewatering unit, they are introduced into the rotary drum and after completion of steps of washing and dewatering, they are manually removed from the interior of the rotary drum. Since the linens are brought in tight contact with the inner wall surface of the rotary drum under the effect of centrifugal force generated by rotation of the linens at a higher speed during a step of dewatering in dependence on the kind of linens, removal of the linens from the interior of the rotary drum after completion of the step of dewatering is a severe task which usually requires a high magnitude of power to be given by a young man.

When the linens are removed from the interior of the rotary drum, it is hardly found that they have been brought in tight contact with the inner wall surface of the rotary drum. However, it is necessary that an operator stoops to extend his hands into the interior of the rotary drum or in some case it is required that he removes the linens therefrom while allowing an upper half of his body to be exposed to the hot atmosphere in the interior of the rotary drum. To eliminate the foregoing inconvenience, a technique for removing linens from the rotary drum after completion of the step of drying was already proposed in Japanese Utility Model Application NO. 19266/1980. This technique is embodied in the form of an apparatus which is so constructed that an inlet port through which wet linens are introduced into the rotary drum is situated on the front door side and an outlet port through which dried linens are removed therefrom is situated on the rear door side. However, with this construction, the whole apparatus tends to be designed in larger dimensions.

As is apparent from the above description, operation for removing linens from the interior of the rotary drum is a hard task which is disliked by anybody. Accordingly, a request for improving such severe task of removing linens from the rotary drum has been raised from the laundry industry.

Now, with the foregoing background in mind, subjects to be solved will be summarized in the following.

To successively perform steps of washing, dewatering and drying, it is necessary that a period of time required for performing the respective steps is substantially shortened and linens can be easily removed away from the inner wall surface of a rotary drum after completion of the step of drying. Particularly, to shorten a period of time required for performing steps of washing, dewatering and drying, the following items should be improved.

(1) Reduction of a time required for the step of washing:

It is advantageous from the viewpoint of an effect of washing that the number of revolution of rotary drum is increased as far as possible to increase the number of drops of linens so that an effect of agitation is increased substantially accompanied by an improved property of washing or a reduced washing time. However, since the number of revolutions of a rotary drum can not be set to a level in excess of 0.8 G for the aforementioned reasons, this offers a significant obstruction when a washing time is to be shortened.

(2) Reduction of a time required for the step of dewatering:

A conventional dewatering unit is usually constructed that the inner wall surface of a rotary drum extends at right angles relative to the direction of centrifugal force (while a so-called corrugation angle exhibits 180°). This construction leads to a significant drawback that water involved in linens located in the proximity of the inner wall surface of the rotary drum is not satisfactorily removed therefrom and moreover a property of dewatering to be naturally derived from an intensity of centrifugal force is not exhibited to the satisfaction of an operator. Consequently, an extra amount of energy and time are consumed for the purpose of drying linens after completion of the step of dewatering.

(3) Reduction of a time required for the step of drying:

Hot air is heretofore introduced into a rotary drum in accordance with the air suction manner. The hot air moves in the rotary drum in the form of a so-called laminar flow of which average flowing speed is determined in the range of 1 to 2 m/sec. Even when it is to flow at the highest speed, the flowing speed is set to a level less than 5 m/sec.

To assure that linens comes in contact with hot air at a high efficiency within the interior of the rotary drum, it is necessary that the number of revolutions of the rotary drum is determined in the range of 0.7 to 0.8 G in terms of a gravity acceleration and the linens are floated in the laminar flow of hot air as long as possible. If the number of revolutions of the rotary drum is set to a level of more or less 1 G or in excess of 1 G, the result is that the linens are brought in tight contact with the inner wall surface of the rotary drum and thereby drying is achieved only with much difficulties. In other words, an opportunity for allowing a mass of linens located at the lower part of the rotary drum to be floated in the hot air as the rotary drum is rotated is maximized when the umber of revolutions of the rotary drum is determined in the range of 0.7 to 0.8 G represented by a gravity acceleration. If the rotary drum is rotated at a rotational speed lower than the foregoing range, the result is that the above opportunity is adversely reduced.

Further, since an average speed of hot air remains at a a low level of 1/2 m/sec, a relative speed of the linens to the hot air can not be set to a high level. Strictly speaking, removing of water vapor evaporated from the linen layer is achieved with a delay corresponding to the reduced relative speed.

For the aforementioned reasons, an average drying time is set in the range of 30 to 40 minutes in accordance with the conventional suction manner. Accordingly, a request for developing a drier adapted to remarkably shorten the average drying time has been raised from the laundry industry.

(4) Easy removal of linens from a rotary drum

As mentioned above, operation for removing linens from a rotary drum is a severe task which is disliked by anyone. Accordingly, a request for improving the removing operation has been also raised from the laundry industry.

## 3. OBJECTS AND SUMMARY OF THE INVENTION

The present invention has been made with the foregoing problems in mind and its principal object resides in providing a drum type washing apparatus which is entirely free from these problems.

Other object of the present invention is to provide a drum type washing apparatus which assures that a property of dewatering inherent to the apparatus of the present invention is satisfactorily exhibited and at the same time a quantity of energy and time consumed during a step of dewatering can be reduced substantially.

Another object of the present invention is to provide a drum type washing apparatus which assures that the aforementioned restriction relative to the number of revolutions of the rotary drum can be eliminated.

Further another object of the present invention is to provide a drum type washing apparatus which assures that linens which have been brought in tight contact with the inner wall surface of the rotary drum can be mechanically removed therefrom at a high efficiency without an occurrence of closure of communication holes as well as without reduction of a dewatering rate.

Further another object of the present invention is to provide a drum type washing apparatus which assures that two significant problems are satisfactorily solved, one of them being such that a conventional apparatus has a restriction relative to the range within which the number of revolutions of the rotary drum is determined so as to allow linens to be floated in a laminar flow of hot air and the other one being such that an average speed of flowing of the linens in the atmosphere of hot air is set to a low level of 1 to 2 m/sec and thereby a relative speed of the hot air to the linens can not be determined at a high level.

Further another object of the present invention is to provide a drum type washing apparatus which offers advantageous effects that linens in a rotary drum can be uniformly dries even when the rotary drum is charged with an excessive amount of load more than a standard quantity of load and a period of time required for performing a step of drying can be shortened substantially.

Still further another object of the present invention is to provide a method of processing the wash using a drum type washing apparatus which assures that an operator is released from the hard operation for removing the wash from the apparatus, i.e., discharge operation.

The above objects are accomplished by a drum type washing apparatus comprising a rotary drum having a peripheral wall and being disposed within a fixed outer drum and being made of a perforated plate, and having a substantially horizontal rotational shaft, said rotary drum having a pot-shaped contour which is increasingly expanded towards an apex formed in the middle part thereof so that the peripheral wall forms a wall surface which is spaced laterally from the rotational shaft and which does not intersect at right angles a direction of action of centrifugal force generated by the rotation of the drum, the apex angle being in the range of 120° - 150°, and being opened against the direction of centrifugal force, an air duct having an air-guide blower and a heater therein, so as to heat the air, the outer drum being provided with a nozzle connected to said air duct and directed slant-wise downwardly towards the centre of said drum with its opening facing said wall surface of said rotary drum, and an exhaust discharge opening formed laterally from said rotary drum in said fixed outer drum and facing said wall surface of said rotary drum, so that hot air can be supplied to and discharged from said rotary drum, whereby the nozzle is so designed that hot air can be blown in the form of a jet stream having a speed higher than 5 m/sec via the holes on said perforated plate directly to the linens.

(1) According to a characterizing feature (1) of the present invention, the apparatus includes a rotary drum of which peripheral wall does not extend at right angles relative to the direction of centrifugal force.

(2) According to a characterizing feature (2) of the present invention, the apparatus is so constructed that the peripheral wall of a rotary drum does not extend at right angles relative to the direction of centrifugal force and the rotary drum has an apex angle in the range of 120° to 150°.

In connection with the above-mentioned characterizing features (1) and (2) of the present invention, it should be noted that as shown in Fig. 31 which illustrates the distribution of a water content in the 1 linen layer as viewed toward the central part of the rotary drum, a main factor of causing an excessively high amount of water content to appear in the vicinity of the inner wall surface of the rotary drum consists in that the wall of the rotary drum extends in parallel with the axis of rotation of the rotary drum and moreover the wall of the rotary drum intersects the direction of centrifugal direction at right angles, as mentioned above, resulting in water discharging being achieved unsatisfactorily. To obviate the foregoing malfunction, it is required to take such a measure that all or a part of the wall of the rotary drum is configured so as not to extend in parallel with the axis of rotation of the rotary drum or the wall of the rotary drum is not designed in a simple cylindrical configuration but assumes a shape which does not allow it to intersects the direction of centrifugal force at right angles.

When the foregoing measure is taken, it is assured that liquid which gets together at certain position offset from holes on the wall of the rotary drum is caused to flow along the inner wall surface of the rotary drum having a predetermined angle under the effect of centrifugal force until it flows through other holes on the wall of the rotary drum. This permits a water content in the linen structure after completion of a step of dewatering to be reduced remarkably.

When the apex angle is set to a smaller value, a water content can be reduced but there appears a tendency that the linen layer comes in tight contact with the inner wall surface of the rotary drum. In connection with this tendency, it has been found that the apparatus in which washing, dewatering and drying are successively performed by way of a series of steps should have a desirable corrugation angle.

According to the characterizing feature (1) of the present invention, the apparatus employs a peripheral wall constituting the rotary drum which does not intersect the direction of centrifugal direction at right angles in compliance with the characterizing feature (1). This makes it possible that liquid which has gotten together along the inner wall surface of the rotary drum adapted to be rotated at a high rotational speed is caused to smoothly flow along the inner wall surface of the rotary drum until it is discharged to the outside through holes on the wall of the rotary drum. Further, according to the characterizing feature (2) of the the present invention, a water content in the linen layer after completion of the step of dewatering is improved substantially compared with the conventional apparatus in respect of distribution and quantity of the water content.

In addition, according to the characterizing feature (2) of the present invention, it is assured that the water content in the linen layer after completion of a step of dewatering under the influence of centrifugal force can be improved substantially compared with the conventional apparatus, a water content in the linen layer can be uniformly distributed within the rotary drum, a period of time required for performing the step of drying can be shortened and moreover an occurrence of excessive drying can be prevented reliably. Another advantageous effects are such that an occurrence of tight contact of the linen layer with the inner wall surface of the rotary drum can be prevented and any unbalanced load can be active in the rotary drum only within a region in the proximity of a center of weight of the rotary drum.

(3) Further, the present invention provides a drum type washing apparatus including a rotary drum made of a perforated plate to perform at least one step of drying the wash in the rotary drum, wherein the apparatus is provided with a hot air blowing nozzle which is located above the rotary drum.

According to the characterizing feature (3) of the present invention, hot air is introduced into the rotary drum in accordance with a blowing manner in contrast with a conventional suction manner. The hot air is blown into the interior of the rotary drum via the perforated plate of the latter in the form of a jet stream having a flowing speed higher than 5 m/sec so that it comes directly in contact with the linens which are lifted up away from the inner wall surface of the rotary drum as the latter is rotated. Concretely, the nozzle is designed to blow hot air toward the central part of the rotary drum within the angular range of 9 o'clock to 12 o'clock or 12 o'clock to 3 o'clock represented by the short pointer of a clock.

With the above construction, the blown hot air is active directly on the linens so that a relative speed of the hot air to the linens can be increased and thereby steam vaporized from the wet linens can be quickly exhausted from the rotary drum. Consequently, a period of time required for performing the step of drying can be shortened substantially.

Although the linens are brought in tight contact with the inner wall surface of the rotary drum as the latter is rotated at a rotational speed as represented by more or less 1 G, hot air can be blown way toward the central part of the rotary drum under the effect of force generated by blowing of the hot air through the blowing nozzle. Thus, there is no need of restricting the rotational speed of the rotary drum within the range of 0.7 to 0.8 G as is the case with the conventional apparatus. Alternatively, it may set to, e.g., 0.8 to 1.2 G. This permit a frequency of exchanging the linens in the rotary drum with other ones to be increased. Advantageous effects derived from the characterizing feature (3) are such that an occurrence of irregular drying of linens can be prevented and a drying time can be reduced remarkably.

As will be readily apparent from the above description, advantageous effects derived from the characterizing feature (3) will be summarized in the following.

(a) In contrast with the conventional apparatus which requires 30 to 40 minutes for drying the linens (at the time when the rotary drum is charged with a rated quantity of load), the drum type washing apparatus of the present invention assures that a drying time can be reduced to 1/2 to 2/3 of that of the conventional apparatus. This makes it possible to save an energy to be consumed at the same rate.

(b) Since the blown air comes directly in contact with the linens, a loosening effect can be added to the linens, causing the dries linens to be finished in a soft fashion.

(c) Since the hot air is blown in the form of a jet stream and the rotary drum is rotated at a higher rotational speed, the linen layer can be uniformly dried at a high speed even when an excessive quantity of linens in excess of the rated quantity of load by 10 to 20 % are introduced into the rotary drum.

## 4. BRIEF DESCRIPTION OF THE DRAWINGS

The present invention will be illustrated in the following drawings in which:

Fig. 1 illustrates a drum type washing apparatus in accordance with the present invention.

Fig. 17 is a sectional view illustrating essential components constituting the apparatus.

Fig. 18 is a graph illustrating a relationship between a drying time and a water content in the linens with respect to both the apparatus of the present invention and a conventional apparatus.

Fig. 29(A) is a sectional side view of a conventional drum type drier.

Fig. 29(B) is a cross-sectional view of the drier in Fig. 29(A).

Fig. 30 is a schematic cross-sectional view of the drier similar to Fig. 29(B), particularly illustrating how the linen layer comes in contact with the inner wall surface of the rotary drum during a period of testing with respect to a period of dewatering.

Fig. 31 is a graph illustrating distribution of a water content during the period of testing as shown in Fig. 30.

Fig. 32 is a cross-sectional view schematically illustrating conventional drum type washing apparatus.

Fig. 33 is a sectional side view illustrating another conventional drum type washing apparatus.

Fig. 33 is a cross-sectional view of the apparatus taken in line C - C in Fig. 33.

Figs. 35 and 36 are a sectional side view schematically illustrating essential components constituting another drum type washing apparatus, respectively.

Fig. 37 is a sectional side view of the apparatus taken in A - A in Fig. 36.

Fig. 38 is a graph illustrating a relationship between a position assumed by linens as viewed toward the central part of a rotary drum and a water content in the linens in a case where a stcp of washing is performed in accordance with a conventional manner.

Fig. 39 is a graph, particularly illustrating a case where a step of washing is performed in accordance with another conventional manner.

Fig. 40 is a sectional side view of another conventional drum type washing apparatus, and

Fig. 41 is a front view of the apparatus in Fig. 40.

## 5. DETAILED DESCRIPTION OF THE PREFERRED EMBODIMENTS

Now, the present invention will be described in a greater detail hereinafter with reference to the accompanying drawings which illustrate preferred embodiment thereof.

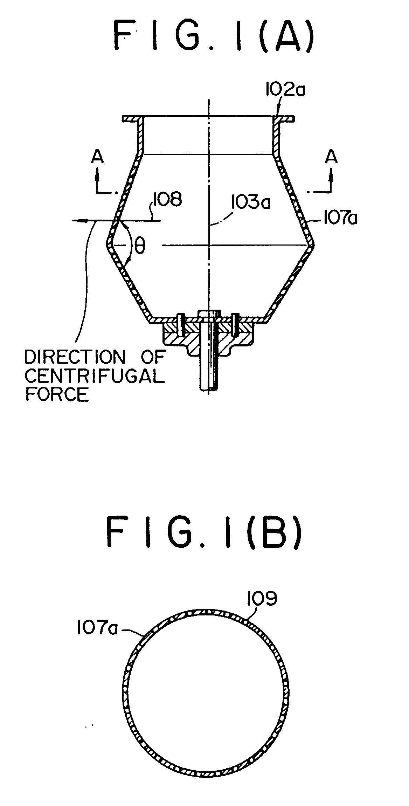

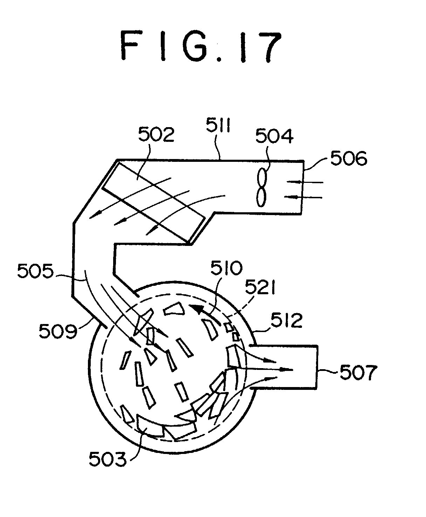

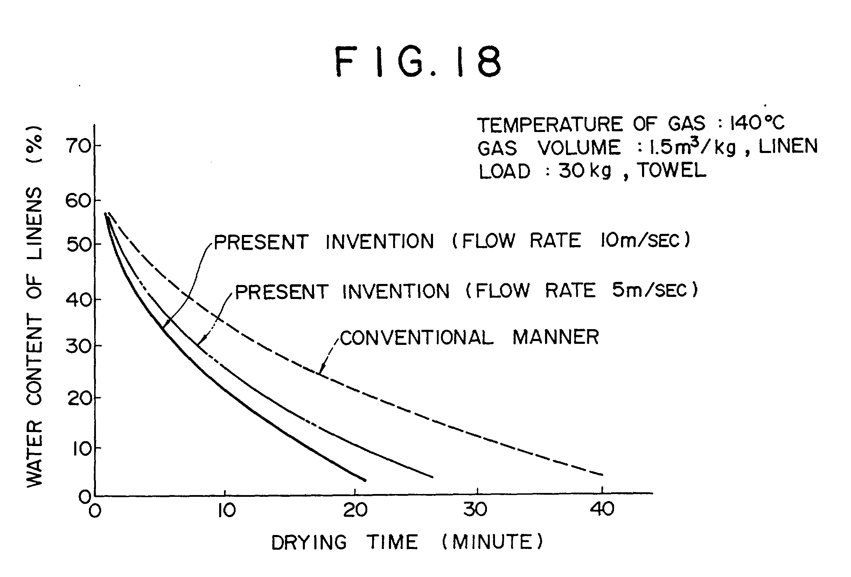

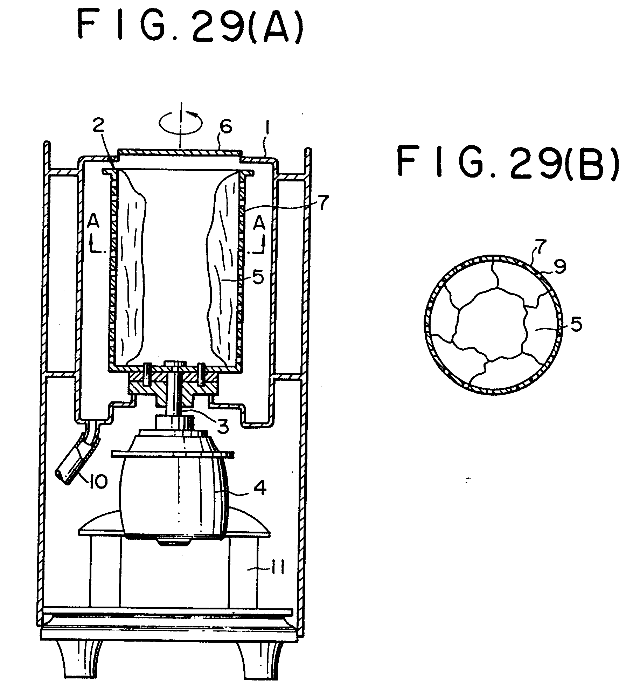

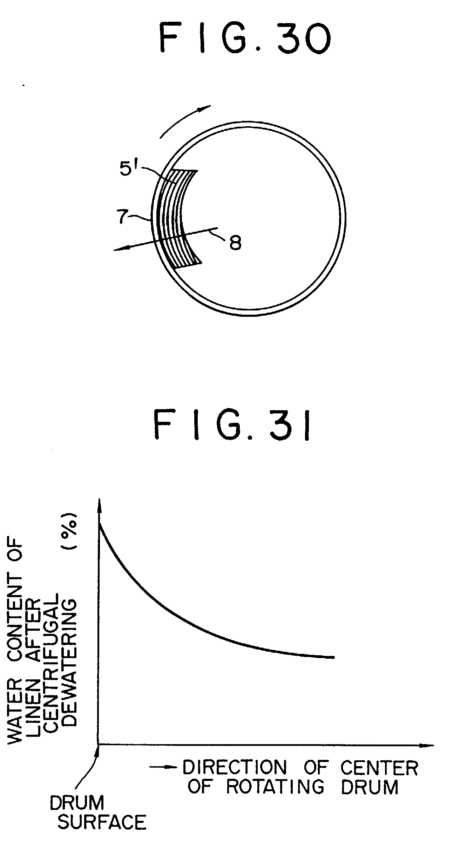

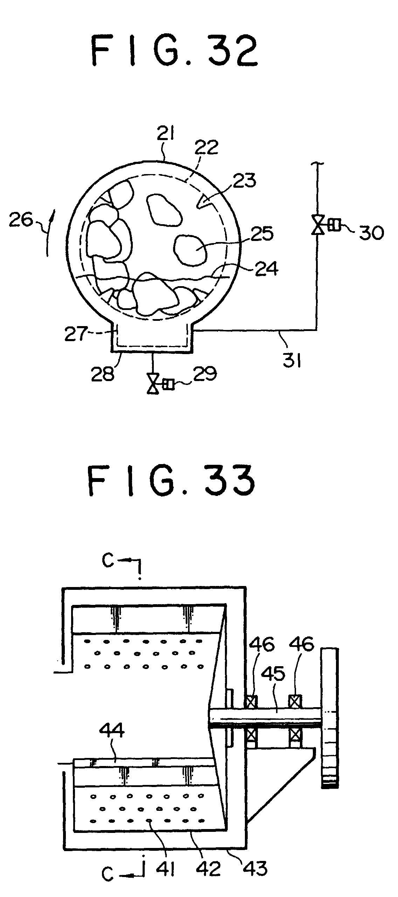

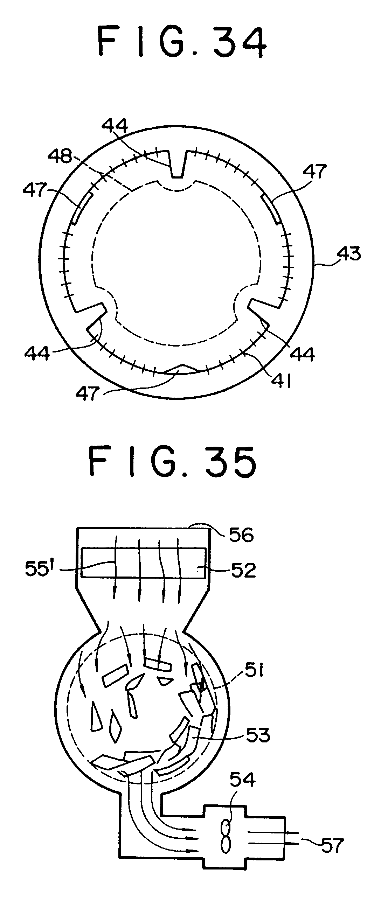

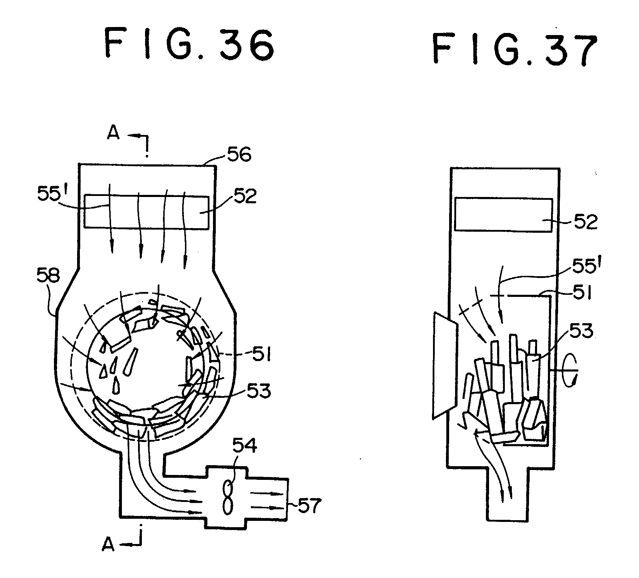

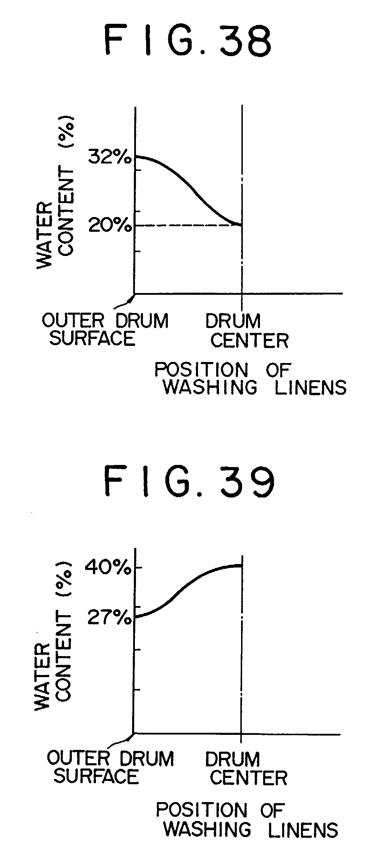

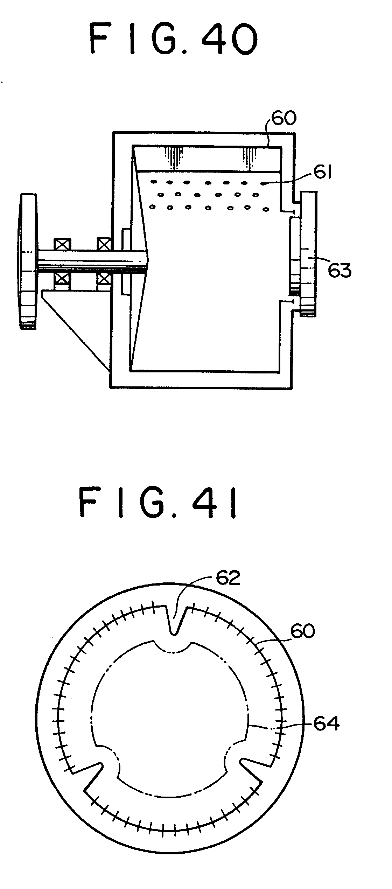

Specifically, Fig. 1(A) is a sectional side view of a dewatering drum taken along the axis of a driving shaft and Fig. 1(B) is a cross-sectional view of the dewatering drum taken in line A - A in Fig. 1(A).

As will be apparent from the drawings, the dewatering drum 102a in accordance with this embodiment exhibits a circular contour as viewed in the horizontal cross-sectional plane located at any position in the vertical direction and it is so configured that a wall 107a as viewed in the vertical sectional view taken along an axis line 103a of rotation extends while defining a predetermined angle relative to the axis line 103a of rotation. In the illustrated embodiment, the whole dewatering drum 102a exhibits a pot-shaped contour which is increasingly expanded toward the middle part thereof as viewed in the vertical direction. The apex angle θ is determined in the range of 120° to 150°.

Fig. 17 is a schematic sectional view illustrating a washing apparatus in accordance with the present invention.

Referring to the drawing, the apparatus includes an outer drum 512, a rotary drum 521 accommodated in the outer drum 512 and a duct 511 as essential components. As is apparent from the drawing, the rotary drum 521 comprising a perforated plate is rotatably supported in the outer drum 512 via bearings (not shown).

The rotary drum 521 is rotated at a required rotational speed by a motor (not shown) in cooperation with a control unit (not shown).

The outer drum 512 is provided with a blowing nozzle 509 serving as an inlet port of hot air 505 and an exhaust port 507 serving as an outlet port of the hot air 505. The blowing nozzle 509 is arranged in such a manner that it is oriented toward the central of the rotary drum 521 while preferably assuming an anglc within the range of 9 o'clock to 12 o'clock or 12 o'clock to 3 o'clock as represented by thc short pointer of a clock. On the other hand, the exhaust port 507 is arrangcd in correspondence to the blowing nozzle 509, while preferably assuming an angle within the range of 2 o'clock to 6 o'clock or 6 o'clock to 10 o'clock as represented in the same manner as mentioned above.

The duct 511 includes an air intake port 506, a blower 504, an air heater 502 adapted to be heated by steam jackets or the like means and a blowing nozzle 509 attached to the outer drum 512, wherein they are successively arranged as viewed in the direction of flowing of the air. It should be noted that an orifice area of the blowing nozzle 509 is so designed that the blown hot air has a speed higher than at least 5 m/sec.

Next, operations of the apparatus as constructed in the above-mentioned manner will be described below.

(1) Linens 503 which have been introduced into the interior of the rotary drum 521 are lifted up away from the inner wall surface of the rotary drum 521 to move round the same as the rotary drum 521 is rotated in the direction as identified by an arrow mark 510 by a motor (not shown) in cooperation with a control unit (not shown) under a condition of acceleration as represented by 0.8 to 1.2 G.

(2) On the other hand, air which has been sucked by the blower 504 is heated up to an elevated temperature in the range of 110°C to 140°C by the air heater 502 so that it is blown directly to the linens 503 through the blowing nozzle 509 via the holes on the perforated plate of the rotary drum 521 in the form of a jet stream having a speed higher than 5 m/scc.

(3) The linens 503 distributed in the proximity of the wall (perforated plate) of the rotary drum 521 are blown away toward the central part of the rotary drum 521 by the hot air 505 flowing in the form of a jet stream.

(4) The hot air 505 which has been blown over the linens 503 passes through the layered structure of the linens 503 which are brought in tight contact with the inner wall surface of the rotary drum 521 by rotation of the latter and thereafter it is discharged to the outside via the exhaust duct 507.

(5) The steps as mentioned in the foregoing paragraphs (1) to (4) are successively executed as the rotary drum 503 is rotated whereby a step of drying the linens 503 proceeds.

The aforementioned steps represent fundamental steps to be executed in accordance with the present invention. To facilitate understanding of the present invention, important features of the present invention will be described below in more details.

Fig. 18 is a diagram illustrating a comparison of a conventional suction type method of drying linens using an uniform flow of hot air with a blowing type method of drying linens using a jet flow of hot air in accordance with the present invention wherein the comparison is made using a relationshipe between drying time and water content of the linens on the basis of an identical flow rate of hot air. As is apparent from the drawing, the method of the present invention assures that a drying time can be reduced to 1/2 to 2/3 compared with the conventional method.

This means that a relationship as represented by $R = KG^{0.7}$ to $KG^{0.8}$ is established from the viewpoint of engineering in the art when it is assumed that a drying speed is identified by R and a flowing speed of hot air by weight is identified by G and that the drying rate R can be increased by increasing a relative speed of the hot air to the linens, i.e., G.

In addition, according to a hitherto known report, the drying speed can be increased by ten times by changing the use of a hot air flowing in the form of a laminar flow to the use of a hot air flowing in the form of a jet flow when the linens 503 are dried while they are placed on a flat plane. Thus, it has been found that employment of a hot air flowing in the form of a jet flow is very effective for drying linens at a high speed.

Ncxt, with respect to the number of revolutions of the rotary drum 521, it is preferable that it is determined within the range as represented by 0.7 to 0.8 C when the conventional method is employed, as mentioned above.

Since the number of revolutions of the rotary drum 521 has a direct effect on a frequency of agitations or replacements of the linens 503 in the rotary drums 521, it is advantageous that it is increased more and more. However, it has an upper limit as represented by 0.7 to 0.8 G, when the conventional method is employed. This is because of the fact that when it is in excess of 0.8 G, the linens 503 tend to get together in the proximity of the inner wall surface of the rotary drum 521 and thereby it become difficult to allow the linens 503 to fall down by their own dead weight even when they are located at the uppermost position in the rotary drum 521. Moreover, the linens 503 are agitated at a reduced efficiency.

On the contrary, the method in accordance with the present invention has an advantageous effect that the linens 503 which are brought in tight contact with the inner wall of the rotary drum 521 can be forcibly blown away therefrom toward the central part of the rotary drum 521 under the influence of jet flow of the hot air which has been blown through the blowing nozzle 509. In addition, in contrast with the conventional method, the method of the present invention has no limit concerning the number of revolutions of the rotary drum 521. Thus, even when the rotary drum 521 is rotated at a high rotational speed in excess of 1 G, the linens can be sufficiently agitated at an increased efficiency as the number of revolutions of the rotary drum 521 is increased.

As will be readily understood from the above description, a combination of the blowing blower 504 with the blowing nozzle 509 assures that the hot air 505 is blown in the form of a jet flow and moreover it becomes possible to reduce a drying time remarkably with the result that an energy required for drying can be saved substantially by the foregoing reduction of the drying time (in approximate proportion to the reduced drying time).

Further, even when linens having a quantity by 10 to 20 % more than that equal to a magnitude of rated load which is determined on the basis of a size of the rotary drum (in accordance with the method which was prescribed and specified by Japan Industrial Machinery Manufacturer Association) are charged in the rotary drum, they can be uniformly dried within a short period of time.

Additionally, it is required that the position where the exhaust port 507 is provided is properly taken into account in association with the position where the blowing nozzle 509 is provided. This is intended to take into account the provision of the exhaust port 507 and the blowing nozzle 509 so that the hot air 505 which has been blown toward the linens 503 in the form of a jet flow passes through the layered structure of the linens 503 and is then discharged to the outside from the apparatus without fail. If they are provided at angles other than the angular range as specified above, both a drying speed and an efficiency will be reduced due to short pass of the hot air. In this connection, the direction of rotation of the rotary drum 521 presents an important factor.

For example, in the embodiment as shown in Fig. 17, an optimum angle at which the exhaust port 507 is provided is set within the angular range of 3 o'clock to 5 o'clock represented by the short pointer of a clock in a case where the hot air 505 is blown at an angle of 10 o'clock likewise represented by the short pointer of a clock. In this case, the direction of rotation of the rotary drum 521 is restricted to an anti-clockwise direction. On the other hand, in a case where the rotary drum 521 is rotated in a clockwise direction, an optimum angle at which the exhaust port 507 is provided is determined within the angular range of 5 o'clock to 6 o'clock represented by the short pointer of a clock.

This means that also in a case where the hot air 505 is blown through the blowing nozzle 509 at an angle of 2 o'clock represented in the same way, an optimum angle at which the exhaust port 507 is provided may be determined in view of the symmetrical relationship as seen in leftward/rightward directions to an angle to be derived from a reading of the above description in an inverse fashion.

When an angle at which the hot air 505 is blown toward the linens 503 in the form of a jet flow is determined within the angular range represented by 9 o'clock to 12 o'clock represented by the short pointer of a clock, they can be dried at the same drying property as in a case where a blowing angle is determined to about 10 o'clock represented in the same way. However, when the blowing angle is determined in excess of the foregoing range, it becomes difficult to uniformly distribute the linens 503 in a space as defined by the rotary drum 521, resulting in an ability of drying being reduced.

Incidentally, when the hot air 505 is blown with a blowing angle which is determined within the angular range of 12 o'clock to 3 o'clock represented by the short pointer of a clock, things are completely same with the aforementioned case.

## Claims

1. A drum type washing apparatus comprising a rotary drum (521) having a peripheral wall and being disposed within a fixed outer drum and being made of a perforated plate, and having a substantially horizontal rotational shaft, said rotary drum having a pot-shaped contour which is increasingly expanded towards an apex formed in the middle part thereof so that the peripheral wall forms a wall surface which is spaced laterally from the rotational shaft and which does not intersect at right angles a direction of action of centrifugal force generated by the rotation of the drum, the apex angle (θ) being in the range of 120 - 150°, and being opened against the direction of centrifugal force, an air duct (511) having an air-guide blower (504) and a heater (502) therein so as to heat the air, the outer drum being provided with a nozzle (509) connected to said air duct and directed slant-wise downwardly towards the centre of said drum with its opening facing said wall surface of said rotary drum, and an exhaust discharge opening formed laterally from said rotary drum in said fixed outer drum and facing said wall surface of said rotary drum, so that hot air can be supplied to and discharged from said rotary drum, whereby the nozzle (509) is so designed that hot air can be blown in the form of a jet stream having a speed higher than 5 m/sec via the holes on said perforated plate directly to the linens.

## Patentansprüche

1. Trommelwaschmaschine, umfassend eine Drehtrommel (521) mit Außenwand, die in eine feststehende äußere Trommel eingesetzt ist, aus gelochtem Blech besteht und mit einer im wesentlichen horizontal gelagerten Welle ausgestattet ist, wobei die Drehtrommel die äußere Form eines Bottichs aufweist, der in Richtung Scheitel, der in dessen mittlerem Teil entsteht, zunehmend weiter wird, so daß die Außenwand eine Wandoberfläche bildet, die in einem Abstand seitlich zur Welle angeordnet ist und nicht im rechten Winkel eine Wirkrichtung einer Zentrifugalkraft schneidet, die durch die Drehung der Trommel erzeugt wird, wobei der Scheitelwinkel (θ) im Bereich zwischen 120 und 150° liegt und geöffnet ist entgegen der Wirkrichtung der Zentrifugalkraft; einen Luftkanal (511), ausgestattet mit einem Gebläse (504) und einer darin befindlichen Heizvorrichtung (502) zur Erwärmung der Luft, wobei die äußere Trommel eine Düse (509) aufweist, die mit dem Luftkanal verbunden ist und schräg nach unten hin zum Zentrum der Trommel weist, dessen Öffnung zur Wandoberfläche der Drehtrommel weist; und einen Abluftauslaß, der seitlich zur Drehtrommel in der feststehenden äußeren Trommel angeordnet ist und auf die Wandoberfläche der Drehtrommel weist, so daß die warme Luft in die Drehtrommel hinein- und aus der Drehtrommel hinausgeleitet werden kann, wozu die Düse (509) so gestaltet ist, daß die warme Luft als Luftstrahl mit einer Geschwindigkeit von mehr als 5 m/sec über die Öffnungen in dem gelochten Blech direkt auf die Wäsche geleitet werden kann.

## Revendications

1. Machine à laver à tambour comprenant un tambour rotatif (521) comportant une paroi périphérique et étant disposé à l'intérieur d'un tambour extérieur fixe, et constitué d'une plage perforée, et comportant un arbre de rotation sensiblement horizontal, ledit tambour rotatif ayant un contour en forme de pot qui s'élargit de façon croissante en direction d'un sommet formé dans sa partie milieu, de sorte que la paroi périphérique forme une surface de paroi qui est espacée latéralement de l'arbre de rotation et qui ne coupe pas à angle droit une direction d'action de la force centrifuge produite par la rotation du tambour, l'angle du sommet (θ) étant dans la plage entre 120° et 150°, et étant ouvert dans le sens opposé à la direction de la force centrifuge, un conduit d'air (511) comportant en son sein un ventilateur de diffusion d'air (504) et un réchauffeur (502), de façon à chauffer l'air, le tambour extérieur étant pourvu d'une tuyère (509) reliée audit conduit d'air et dirigée avec une certaine inclinaison vers le bas en direction du centre dudit tambour, son ouverture faisant face à ladite surface de paroi dudit tambour rotatif, et une ouverture de décharge d'échappement formée latéralement par rapport audit tambour rotatif dans ledit tambour extérieur fixe, et faisant face à ladite surface de paroi dudit tambour rotatif, de sorte que de l'air chaud peut être délivré audit tambour rotatif et déchargé de celui-ci, ce par quoi la tuyère (509) est conçue de telle sorte que l'air chaud peut être soufflé sous la forme d'un jet d'air ayant une vitesse supérieure à 5 m/sec via les trous situés sur ladite plaque perforée, directement sur le linge de maison.

# F I G. I (A)

102a

A ⟵⟶ A

108   103a   107a

θ

DIRECTION OF
CENTRIFUGAL
FORCE

# F I G. I (B)

109

107a

# F I G. 17

# FIG. 18

TEMPERATURE OF GAS : 140°C
GAS VOLUME : 1.5m³/kg , LINEN
LOAD : 30 kg , TOWEL

PRESENT INVENTION (FLOW RATE 10m/SEC)

PRESENT INVENTION (FLOW RATE 5m/SEC)

CONVENTIONAL MANNER

WATER CONTENT OF LINENS (%)

DRYING TIME (MINUTE)

# F I G. 29(A)

# F I G. 29(B)

# F I G. 30

# F I G. 31

WATER CONTENT OF LINEN AFTER CENTRIFUGAL DEWATERING (%)

DIRECTION OF CENTER OF ROTATING DRUM

DRUM SURFACE

EP 0 343 096 B1

# F I G. 32

# F I G. 33

# F I G. 34

# F I G. 35

# F I G. 36

# F I G. 37

# F I G. 38

POSITION OF
WASHING LINENS

# F I G. 39

POSITION OF
WASHING LINENS

# F I G. 40

# F I G. 41